# EUROPEAN PATENT SPECIFICATION

(11) **EP 2 525 674 B1**
(45) Date of publication and mention of the grant of the patent: **08.02.2017**
(21) Application number: 10799022.8
(22) Date of filing: 21.12.2010
(51) Int. Cl.: A23L 33/185, A23L 33/21, A23L 2/52, A23L 2/66, A23L 33/22

(54) **PREBIOTIC USE OF WATER SOLUBLE SOYBEAN POLYSACCHARIDE**
PRÄBIOTISCHE VERWENDUNG VON WASSERLÖSLICHEM SOJAPOLYSACCHARID
UTILISATION PRÉBIOTIQUE D'UN POLYSACCHARIDE DE SOJA SOLUBLE DANS L'EAU

(30) Priority: 22.01.2010 EP 10151442
(43) Date of publication of application: 28.11.2012
(73) Proprietor: Unilever N.V., 3013 AL Rotterdam (NL); Unilever PLC, London EC4Y 0DY (GB)
(72) Inventor: KEMPERMAN, Robèr, Antoine, NL-3133 AT Vlaardingen (NL); MELLEMA, Michel, NL-3133 AT Vlaardingen (NL)
(74) Representative: Askew, Sarah Elizabeth
(86) International application number: PCT/EP2010/070373
(87) International publication number: WO 2011/088943

(56) References cited:
- EP-A1- 1 600 207
- WO-A1-2005/063056
- WO-A1-2008/149738
- US-A1- 2004 247 766
- DATABASE WPI Week 200765 Thomson Scientific, London, GB; AN 2007-695663 XP002583919, & JP 2007 215474 A (MORINAGA & CO LTD) 30 August 2007 (2007-08-30)
- DATABASE WPI Week 200473 Thomson Scientific, London, GB; AN 2004-741288 XP002583920, & JP 2004 298047 A (MORINAGA & CO LTD) 28 October 2004 (2004-10-28)
- DATABASE CAPLUS [Online] CHEMICAL ABSTRACTS SERVICE, COLUMBUS, OHIO, US; 26 November 2003 (2003-11-26), Furuta et al.: "Soybean polysaccharide", XP002583921, retrieved from STN Database accession no. 2003:922334
- ANONYMOUS: "Opinion of the Scientific Committee on food on Soybean Hemicellulose", , [Online] 4 February 2003 (2003-02-04), pages 1-9, XP002583922, Brussel, Belgium. European Commission. Health & Consumer protection Directorate-General Retrieved from the Internet: URL:http://ec.europa.eu/food/fs/sc/scf/out 187_en.pdf> [retrieved on 2010-05-26]
- DATABASE WPI Week 200467 Thomson Scientific, London, GB; AN 2004-680872 XP002583963, & JP 2004 261139 A (YAKULT HONSHA KK) 24 September 2004 (2004-09-24)
- DATABASE CAPLUS [Online] 11 August 2009 (2009-08-11), LIU ET AL.: "Application of soluble soybean polysaccharide in milk beverage added with plant protein", XP002583923, retrieved from STN Database accession no. 2009:960487 & CN 101 496 541 A (SHANDONG WONDERFUL IND GROUP C [CN]) 5 August 2009 (2009-08-05)
- KIARIE ETAL.: "Non starch polysaccharides hydrolysis products of soybean and canola meal protect against enterotoxigenic Escherichia coli in piglets", THE JOURNAL OF NUTRITION, vol. 138, no. 3, 18 December 2007 (2007-12-18), pages 502-508,
- LAN ET AL.: "In vitro fermentation kinetics of some non-digestible carbohydrates by the caecal microbial community of broilers", ANIMAL FEED SCIENCE AND TECHNOLOGY, vol. 123-124, 4 April 2005 (2005-04-04), pages 687-702,

## Description

### Field of the invention

The present invention relates to the prebiotic effects of water soluble soybean polysaccharides and their use in the promotion of growth of beneficial gut microbiota.

### Background of the invention

The human gut microbiota comprises more than 500 different species of bacteria that have a great metabolic impact upon human health. One important function of the gut microbiota, from the host's point of view, is to prevent colonization of potentially pathogenic microorganisms by outcompeting invading pathogens for ecological niches and metabolic substrates. Microbiological metabolism in the gut also serves as an important source of energy for coloncytes and as a source of B vitamins and vitamin K. The gut microbiota act as an important modulator of the immune system, not only educating the naive infant immune system but also serving as an important source of non-inflammatory immune stimulation throughout life in healthy individuals.

The gut microbiota can be divided into potentially deleterious and potentially health-promoting species. For example, some *Clostridium spp.,* and proteolytic *Bacteriodes spp.* are considered potentially harmful because of their association with certain acute and chronic gastrointestinal complaints. Their metabolic end products are toxic and can cause cellular destruction in the bowel. Moreover, some products may enter the bloodstream and exert negative effects systemically. On the other hand, *Bifidobacterium spp.,* and the lactic acid bacteria, particularly *Lactobacillus spp.* are considered to play an important role in a healthy gut ecosystem through their antagonistic activities towards potential pathogens, immunomodulatory activities, production of short chain fatty acids and reduction of microbiota associated enzyme activities involved in the production of carcinogens and gentoxins.

There is currently much interest in the concept of actively managing the colonic microbiota with the aim of improving host health. This has been traditionally attempted by the consumption of live microbial food supplements known as probiotics. A probiotic has been defined as "live micro-organisms which when administered (consumed) in adequate amounts confer a health benefit on the host". The most well studied and commercially used probiotics are *lactobacilli* and *bifidobacteria.* Examples of products containing such probiotics are yoghurts and dairy-based drinks such as Actimel™.

An alternative approach is the consumption of other types of food ingredients known as prebiotics. A prebiotic has been defined as 'a nondigestible food ingredient that beneficially affects the host by selectively stimulating the growth and/or activity of one or a limited number of bacteria in the colon and thus improves host health'.

For a food ingredient to be classified as a prebiotic, it should:
1. be neither hydrolysed nor absorbed in the upper part of the gastro- intestinal tract;
2. be a selective substrate for one or a limited number of potentially beneficial commensal bacteria in the colon, thus stimulating the bacteria to grow, become metabolically activated, or both; and
3. be able as a consequence to alter the colonic microbiota toward a more healthy composition.

As such, they fortify indigenous gut microbiota components that are thought to be of benefit. Known prebiotics are dietary soluble fibres such as inulin, lactulose, fructo-oligosaccharides and galacto-oligosaccharides which are able to survive the digestion and selectively stimulate the beneficial members of the gut microbiota, such as bifidobacteria, in the colon. Other known prebiotics are the soy oligosaccharides raffinose and stachyose.

Compositions comprising soybean polysaccharides have been described in the following publications: WO 2008/149738; JP2007215474; JP 2004298047; Ferula et al. "Soybean polysaccharide" (2003) Chem. Abs. Service; JP2004261139; WO 2005/063056; and US 2004/247766). Publications that mention soy related prebiotic compositions are given below.

US20070218170 relates to alkaline beverages and more particularly to soluble fiber containing alkaline beverages and methods of producing the same. It discloses that studies have shown that soy fiber acts as a prebiotic and provides a benefit in lowering LDL cholesterol and triglycerides.

EP904784 relates to a nutritional preparation with health promoting action, in particular with respect to the prevention and treatment of disorders of the gastrointestinal tract. In claim 4 it refers to nutritional preparation according to any of the preceding claims, further comprising a prebiotic compound, preferably chosen from fibres that produce butyrate/butyric acid or propionate/propionic acid upon fermentation, such as resistant starch, gums, soy polysaccharides and/or proteins.

In an article by I. Espinosa-Martos and P. Ruperez titled 'Ingestible fraction of okara from soybean: composition, physicochemical properties and in vitro fermentability by pure cultures of Lactobacillus acidophilus and Bifidobacterium bifidum' (Eur. Food Res. Technol. (2009) 228(5):685-693), major non-digestible components of soybean seeds and okara were determined by an in vitro enzymatic-physiological method, alternative to dietary fibre. Total indigestible fraction was found to be higher in okara (41.6%) than in seeds (28.5%), and consisted of soluble and insoluble fractions, mainly composed of non-starch polysaccharides, klason lignin and resistant protein. Total protein was lower in okara (32.29%) than in seeds (46.97%), as were oil (14.72% okara-20.89% seeds) and ash contents (3.18% okara-4.60% seeds). In vitro digestibility of protein was lower for okara (84.3%), than for soybean seed (91.8%). Moreover, okara showed high swelling (10.54 ± 0.14 mL/g d.w.) and water retention capacity (8.87 ± 0.06 g/g d.w.) and was fermented in vitro to a greater extent by Bifidobacterium bifidum (29.8%), than by Lactobacillus acidophilus (8.3%). For its composition, physico-chemical properties and bifidogenic capacity in vitro, okara is a potential candidate to be a prebiotic fibre-rich ingredient of new functional foods.

In OrganicProcessing Magazine, Leslie M. Nsofor, refers in an article titled' Current Trends in Soy Ingredient Applications and Uses in Organic Products' to 'the prebiotic value of soluble soy fiber'. However the part of the article where this part of text refers to only mentions that 'the nutritional support offered by soy oligosaccharides (small sugars) to the bacteria in the human colon (probiotics) is emerging'.

Lan et al. (In vitro fermentation kinetics of some non-digestible carbohydrates by the caecal microbial community of broilers; Animal Feed Science and Technology (2005) 123-24:687-702) investigated the fermentation kinetics of some non-digestible carbohydrates (NDC) by caecal microbial community of broiler chickens by an assessment of the cumulative gas production during fermentation of each substrate. Four extracted non-digestible carbohydrates were studied as to their production of volatile fatty acids, which are related to the intestine health: soybean meal oligo- and water-soluble polysaccharides (SMO and SMP), alfafa meal oligo- and water-soluble polysaccharides (AMO and AMP).

Kiarie et al. (Non starch polysaccharides hydrolysis products of soybean and canola meal protect against enterotoxigenic Escherichia coli in piglets, The Journal of Nutrition (2007) 138(3):502-08) investigated the use of an ethanol soluble soybean polysaccharide in piglets. The article hypothesizes the possibility of the mode of action of ethanol-soluble (ES) hydrolysis products from soybean meal (SBM) being via a prebiotic effect conferred by lactic acid bacteria. The experiments were conducted using a small intestine pig model, with inoculation of a specific enterotoxigenic *E*. *coli* (*ETEC*) strain. The maximum amount of nonstarch polysaccharides (NSP) hydrolysis product from SBM used in the protocol to perfuse piglets was 19.2 mg.

### Summary of the invention

In the current growing health food market, new prebiotic compositions are required for managing gut health.

It is therefore an objective of the current invention to provide a composition for use as a prebiotic.

We have now surprisingly found that this objective can be obtained, at least in part, by use of water soluble soybean polysaccharide comprising a galacturonic acid content of less than 40 mol%, preferably less than 30 mol% and a neutral sugar (side chains) content of over 40 mol%, preferably over 50 mol%. It was found that when consumed by a human in an amount of at least 2 grams per day this water soluble soybean polysaccharide can be used as a prebiotic composition.

Accordingly, the invention relates to a composition for use as a prebiotic, wherein the prebiotic selectively stimulates the growth of bifidobacteria, the composition comprising water soluble soybean polysaccharide, wherein the water soluble soybean polysaccharide comprises a galacturonic acid content of less than 40 mol%, preferably less than 30 mol% and a neutral sugar (side chains) content of over 40 mol%, preferably over 50 mol%, and wherein the composition is consumed by a human in an amount of at least 2 g water soluble soybean polysaccharide per day, preferably at least 3 g per day.

### Detailed description

All percentages herein are by weight (wt%), unless otherwise specified. The weight percent values are based on the weight of the ingredient of interest in percentage in relation to the total weight of all ingredients present in the product of interest, unless specified otherwise.

In a first aspect, the invention relates to a composition for use as a prebiotic, wherein the prebiotic selectively stimulates the growth of bifidobacteria, the composition comprising water soluble soybean polysaccharide (SSPS), wherein the water soluble soybean polysaccharide comprises a galacturonic acid content of less than 40 mol%, preferably less than 30 mol% and a neutral sugar (side chains) content of over 40 mol%, preferably over 50 mol% and wherein the composition is consumed by a human in an amount of at least 2 g water soluble soybean polysaccharide per day, preferably at least 3 g per day.

In respect to the use of the term 'water soluble soybean polysaccharide' as used herein, the term is defined as a heteropolysaccharide comprising a galacturonic acid content of less than 40 mol%, preferably less than 30 mol%, more preferably less than 25 mol% , most preferably less than 20 mol%, and a neutral sugar (side chains) content of more than 40 mol%, preferably more than 50 mol%, more preferably more than 60 mol%.

The neutral sugar composition and the level of the different components is analysed using gas chromatography (GC) after hydrolysis and derivatisation [Hans N. Englyst and Hohn H. Cummings, Simplified method for the measurement of total non-starch polysaccharides by gas-liquid chromatography of constituent sugars as alditol acetates, Analyst, 1984, 109, 930-942; Hauke Hilz, et al, Cell wall polysaccharides in black currants and bilberries - characterisation in berries, juice, and press cake, Carbohydrate Polymers, 2005, 59(4), 477-488].

The uronic acid content is analysed with a m-hydroxydiphenyl colour assay [Thibault, J.F. Automatisation du dosage des substance pectiques par la methode au meta-hydroxydiphenyl (An automatised method for the determination of pectic substances), Lebensmittel-Wissenschaft und Technologie, 1979, 12, 247-251].

Water soluble soybean polysaccharide is a branched polymer. Without wishing to be bound by it, its backbone is believed to consist of homogalacturonan regions interlinked by short regions of rhamnogalacturonan to which side chains of neutral sugars are attached. The main components in a preferred SSPS are galactose, arabinose, rhamnose, fucose, xylose, glucose and galacturonic acid. A preferred SSPS consist mainly of arabinose, galactose and galacturonic acid. Preferably, the amount of galactose in the SSPS is higher than 20 mol%, preferably higher than 30 mol%, more preferably higher than 35 mol%. The amount of arabinose in the SSPS is preferably higher than 15 mol%, more preferably higher than 20 mol%, most preferably higher than 23 mol%.

Preferably the prebiotic effect for which the water soluble soybean polysaccharide is used is the selectively stimulated growth of bifidobacteria.

It is generally recognised that consumption of a prebiotic composition and the selective bacterial increase resulting therefrom, has a number of associated positive health effects. Examples of such positive health effects are:
- stimulation of the immune system
- stimulation of the bowel function/ support of digestive well being
- protection against infectious diseases (bad bacteria that can cause travellers' diarrhoea)
- enhancement of mineral absorption (and related effects like a reduced risk of osteoporosis due to enhance Ca absorption)
- improvement of the gut barrier function.

Beverages are popular and easy to consume products which are an ideal medium for providing nutritious ingredients. It is therefore preferred that the water soluble soybean polysaccharide is consumed by the human in which the prebiotic effect is to be induced via a beverage, wherein the water soluble soybean polysaccharide is present at a level of at least 1.0 wt% preferably at least 1.5 wt%, more preferably at least 2.0 wt%. For e.g. nutritional reasons, such beverages may preferably comprise protein, e.g. in an amount of 0.2 to 5.0 wt%.

Especially acidic beverages are very well liked by consumers because of their fresh taste which is due to the acidity of the beverage. It is therefore preferred that the pH of the protein-containing beverage is below 7, more preferably between 3.0 and 5.5, most preferably between 3.8 and 4.7.

A hurdle to adding protein to acidic beverages, however, is the relative insolubility of proteins in an aqueous acidic environment. Most commonly used proteins, such as soy proteins and casein, have an isoelectric point at an acidic pH. Thus, the proteins are least soluble in an aqueous liquid at or near the pH of acidic beverages. For example, soy protein has an isoelectric point at pH 4.5 and casein has an isoelectric point at a pH of 4.7, while most common juices have a pH below these isoelectric points. As a result, protein tends to settle out as sediment in a protein-containing acidic beverage which is an undesirable quality in a beverage.

An additional advantage of having water soluble soybean polysaccharide present in a protein-containing acidic beverage is the fact that the water soluble soybean polysaccharide acts as a protein stabiliser and will prevent or reduce protein-aggregation and/or sedimentation.

If the water soluble soybean polysaccharide is also used as a protein stabiliser it preferably has a relatively low zetapotential. At pH 4, the zetapotential of SSPS is preferably less than -20 mV, more preferably less than -15 mV, most preferably less than -12 mV. Although the zetapotential of a preferred SSPS is relatively low, it is preferred that the SSPS should at least have some charge.

Due to the nutritious value of proteins it is preferred that the beverage will also contain an amount of proteins which is preferably from 0.2 to 5.0 wt%, more preferably from 0.3 to 4.0 wt%, most preferably from 0.5 to 3.0 wt%.

The protein in the protein-containing beverage may be obtained from any suitable source like for example dairy milk or soybeans. Recently it has been discovered that certain proteins have specific health benefits beyond providing nutrition. For example, soy protein has been recognized by the United States Food and Drug Administration as being effective to lower blood cholesterol concentrations in conjunction with a healthy diet. It is therefore preferred that the beverage comprises soy proteins. Most preferably the soy proteins are the only source of proteins.

The soy protein source may be provided in any suitable form, for example in the form of soymilk, soymilk extract, fermented soymilk, soy protein isolate, soy protein concentrate, whole bean powder, soy flour or mixtures thereof. Such protein sources are commercially available. Preferred sources of soy protein are soymilk, soy protein isolate or mixtures thereof. The most preferred source of soy protein is soymilk or whole bean powder.

From an economical point of view it is most advantageous to use a soy protein that is obtained from the raw soybean with as few fractionation and/or purification steps as possible. It is thus preferred that the soy protein used in the process of the present invention has a degree of solubility at a pH of 4.5 of less than 40 wt%, more preferably less than 30 wt%, most preferably less than 20 wt%.

In respect to the use of the term "degree of protein solubility," the term is defined herein as a scale of solubilisations of protein in water and is represented by the portion of the protein that is "soluble" at a concentration of 2.5 wt% of said protein in water at a pH of 4.5 (the average isoelectric point of common soy proteins) and a temperature of 20°C.

The degree of solubility is determined by dispersing a protein powder in water so that the concentration of the constituent protein becomes 2.5 wt%, followed by thoroughly stirring. After adjusting the pH of the resulting solution if necessary, the solution is centrifuged at 10,000 G for 5 minutes, and the proportion of the supernatant protein to the total protein is determined. This proportion equals the degree of solubility.

In respect to the use of the term "isoelectric point," (pl) the term is defined herein as the midpoint of the composite curve of the various isoelectric points of the individual protein components.

In order for the consumer to take in a sufficient amount of water soluble soybean polysaccharide without having to drink excessive amounts of beverage, it is preferable that the beverage is packaged and comprises water soluble soybean polysaccharides in an amount of at least 2 g, preferably at least 2.5 g, more preferably at least 3 g, per package. For the same reason it is preferred that the volume of the beverage in the pack is between 50 and 500 ml, more preferably between 100 and 400 ml, most preferably between 125 and 300 ml.

Although the water soluble soybean polysaccharide may already act as a stabiliser in the beverage, also additional stabiliser may be used in the beverage. Optional additional polysaccharide stabilisers comprise pectin, carrageenan, alginates, carboxymethyl cellulose, xanthan, gellan gum, gum arabic or combinations thereof.

Further to the above given ingredients the beverage may also contain other additional ingredients. Suitable additional ingredients comprise carbohydrates, prebiotics, fruits (including their juices, and concentrates thereof), emulsifiers, proteins, flavours, organic acids, fats, vitamins, minerals, high intensity sweeteners or mixtures thereof.

Suitable additional prebiotic compounds comprise dietary soluble fibres such as inulin, lactulose, fructo-oligosaccharides and galacto-oligosaccharides, polydextrose and the soy oligosaccharides raffinose and stachyose or mixtures of any of these. Suitable carbohydrates include sugars, starches, and maltodextrin. Suitable fruits include apple, apricot, banana, grapefruit, grape, guava, lemon, lime, mandarine, mango, orange, peach, pommelo, pumpkin, squash, tangarine, tomato and mixtures thereof. Suitable organic acids include lactic acid, malic acid, citric acid and ascorbic acid. Suitable minerals include calcium, magnesium, iron and zinc. Suitable high intensity sweeteners include sucralose and aspartame. The water content of the beverage may be between 60 and 99 wt%, preferably between 80 and 98 wt%.

In order to increase its shelf life, the beverage is preferably pasteurised, more preferably it is sterilised. Preferably the beverage is pasteurised or sterilised by subjecting the beverage to a heat treatment in excess of 60 °C, preferably in excess of 80 °C, more preferably in excess of 90 °C, more preferably in excess of 95 °C.

### Examples

### Batch fermentations

Batch fermentations were performed in triplicate with faecal material of three different healthy human volunteers who had not been prescribed antibiotics for at least 6 months prior to the study and had no history of any gastrointestinal disease.

Faecal samples were immediately after collection stored at anaerobic conditions. For the batch fermentation experiments faecal samples were diluted 10-fold in anaerobic phosphate buffered saline (PBS) (contains per litre of distilled water: 8g NaCl, 0.2 g KCL, 1.15 g Na₂HPO₄ and 0.2 g KH₂PO₄, pH=7.3; Oxoid) and homogenised in a stomacher for 2 min.

Fermentations were performed in 300 ml water jacketed chemostats (Soham Scientific) filled with 180 ml basal medium. Basal medium contained, per litre, 2 g peptone water (Oxoid), 2 g yeast extract (Bacto), 2 g NaHCO₃ (Sigma), 0.5 g bile salts No3 (Oxoid), 0.5 g L-cysteine (Sigma), 10 ml of the following solutions NaCl (10 g/L; Fisher Scientific), K₂HPO₄(4 g/L; Merck), KH₂PO₄ (4 g/L; Sigma), MgSO₄.7H₂O (1 g/L; Merck), CaCl₂.6H₂O (1 g/L; Fisher Scientific), 10 ml Hemin (0.5 g/L; Sigma), 4 ml Resazurin (0.25 g/L; Brocades Stheeman & Pharmacia), 2 ml Tween 80 (Koch-light), 10 µl vitamin K1 (Sigma).

The medium was aliquoted into the chemostats and autoclaved at 121°C for 15 minutes. The temperature of each chemostat was maintained at 37°C via a circulating water bath and the pH of the media was maintained at pH 6.8-7.0 by means of a pH controller (Electrolab). The media were continuously sparged with O₂-free N₂.

Chemostats were inoculated with 20 ml faecal slurry mixed with substrate. Final substrate concentration was 1%. Substrates used were inulin (Beneo ST, Orafti) and water soluble soybean polysaccharides (CA100, Fuji Oil). The water soluble soybean polysaccharide (CA100) as used in these experiments comprised the following components with a rough indication of the amounts in brackets: fucose (about 3 mol%), arabinose (about 25 mol%), rhamnose (about 5 mol%), galactose (about 39 mol%), glucose (about 3 mol%), xylose (about 6 mol%), galacturonic acid (about 18 mol%) and glucuronic acid (about 1 mol%).

At the start of the experiment and after 18 hours of fermentation multiple 1 ml samples from each vessel were withdrawn for analysis.

Cells were harvested from the supernatant by centrifugation for 2 min in a tabletop centrifuge at maximum speed. Pellets frozen at -20 °C for later use. *DNA isolation*

DNA isolation from frozen cell pellets for microbial quantification (reference as well as faecal material) was done with the Stool isolation kit from Qiagen according to the manufacturer's instructions with the following modifications. One thin wall polymerase chain reaction (PCR) tube containing 600-650 mg glass beads (Zirconia/Silica Beads, 0.1 mm; BioSpec Products) was added to cells re-suspended in ASL buffer. The tubes were subsequently shaken for 45 seconds at speed setting 6 in the in the Fastprep® FP120 (MP Biomedicals). The obtained suspensions were incubated for 5 minutes at 95 °C. The obtained DNA was stored at -20°C until further use.

### Microbial quantification by qPCR

Primers (Applied Biosystems or Invitrogen), reference DNA, target organisms, genome weights and PCR conditions were used as listed in Table 1. Quantitative PCR reactions and subsequent dissociation analysis were performed on an Applied Biosystems 7500 real time PCR machine using the 7500 Real-Time PCR System Sequence Detection Software, Version 1.3.1 (Applied Biosystems). Assays were performed in 25 microliter (µl) volumes containing 12.5 microliter (µl) POWER SYBR Green I PCR Master Mix, forward and reverse primers and 2.5 microliter (µl) of a 10 fold dilution of the extracted DNA.

For quantitative analysis the threshold cycle (Ct) of each sample was compared to a standard curve made from serial DNA dilutions of chromosomal DNA of the corresponding reference strain. The copy number is calculated by dividing the DNA concentration by the genome weight. The genome weight in turn is calculated by multiplying the base pare weight (607.4 g/mol) with the relevant genome size in base pair (bp) and divided by the Avogadro number (6.02E+23). Calculation is done with a copy number of the reference material of 1 indicating that one target genome (*Bifidobacterium; Bacteroides fragilis* group; *Lactobacillus*) or one 16S rDNA molecule (total bacteria) is representative for one bacterial cell. Results were expressed as copy numbers/ml, taking into account the dilution steps in the DNA isolation method.

**Table 1.**

| **PCR target** (Amplicon size, reference DNA, genome size of reference DNA) | amplification** | primers (nM) | sequences (5'-->3') |
|---|---|---|---|
| **Total bacteria** (466, F. *prausznitzii* ATCC 27766 16S DNA PCR product*, 1540 bp) (Ref. 1 and 4) | 10' 95°C, 40x(15" 95°C, 20" 55°C, ***1***' ***60°C**)* | F_eub(100) | |
| | | R eub (100) | |
| ***Bifidobacterium*** (550, *B. longum* ATCC15707, 3 Mb) (Ref. 3) | 10' 95°C, 40x(15" 95°C, ***80" 60°C**)* | g-Bifid-F (100) | |
| | | g-Bifid-R (100) | |
| ***Bacteroides fragilis*** group (495, *B*, *eggerthi* ATCC 27754, 1.6 Mb) (Ref. 3) | 10' 95°C, 40x(15" 95°C, 20" 55°C, ***1***' ***60°C**)* | g-Bfra-F (100) | |
| | | g-Bfra-R (100) | |
| ***Lactobacillus*** (340, L. *reuteri* ATCC 55730, 2 Mb) (Ref. 2, 6 and 7) | 10' 95°C, 40x(15" 95°C, ***1' 63°C**)* | Lac1 (800) | |
| | | Lab-0677 (800) | |

| | | | |
|---|---|---|---|
| **F. prausnitzii* is difficult to cultivate therefore the *F*. *prausnitzii* 16S rDNA was amplified with primers TPU1 (AGAGTTTGATCMTGGCTCAG) and RTU8 (AAGGAGGTGATCCANCCRCA) to serve as a reference (5). ** In bold and italic, the step at which the fluorescent signal is acquired; underlined the annealing step | | | |

### References:

1. Haarman, M. and J. Knol. 2006. Quantitative real-time PCR analysis of fecal Lactobacillus species in infants receiving a prebiotic infant formula. Appl. Environ. Microbiol. 72:2359-2365.
**2.** Heilig, H. G., E. G. Zoetendal, E. E. Vaughan, P. Marteau, A. D. Akkermans, and W. M. De Vos. 2002. Molecular diversity of Lactobacillus spp. and other lactic acid bacteria in the human intestine as determined by specific amplification of 16S ribosomal DNA. Appl. Environ. Microbiol. 68:114-123.
3. Matsuki, T., K. Watanabe, J. Fujimoto, T. Takada, and R. Tanaka. 2004. Use of 16S rRNA gene-targeted group-specific primers for real-time PCR analysis of predominant bacteria in human feces. Appl. Environ. Microbiol. 70:7220-7228.
4. Nadkarni, M. A., F. E. Martin, N. A. Jacques, and N. Hunter. 2002. Determination of bacterial load by real-time PCR using a broad-range (universal) probe and primers set. Microbiology 148:257-266.
5. Ott, S. J., M. Musfeldt, U. Ullmann, J. Hampe, and S. Schreiber. 2004. Quantification of intestinal bacterial populations by real-time PCR with a universal primer set and minor groove binder probes: a global approach to the enteric flora. J. Clin. Microbiol. 42:2566-2572.
6. Rinttila, T., A. Kassinen, E. Malinen, L. Krogius, and A. Palva. 2004. Development of an extensive set of 16S rDNA-targeted primers for quantification of pathogenic and indigenous bacteria in faecal samples by real-time PCR. J. Appl. Microbiol. 97:1166-1177.
7. Walter, J., C. Hertel, G. W. Tannock, C. M. Lis, K. Munro, and W. P. Hammes. 2001. Detection of Lactobacillus, Pediococcus, Leuconostoc, and Weissella species in human feces by using group-specific PCR primers and denaturing gradient gel electrophoresis. Applied and Environmental Microbiology 67:2578-2585.

### Results:

Triplicate faecal fermentations were performed using SSPS, inulin (positive control) and blank (negative control) as substrates. In all fermentations a selective increase of bifidobacteria was observed with both inulin and SSPS as substrates but not for the blank fermentation as can be seen in table 2. The fermentation profile for SSPS across all measured bacterial groups was comparable to that of inulin, which is a known prebiotic.

Table 2, 3 and 4 gives the bacterial counts for the groups *Bacteroides, Bifidobacterium, Lactobacillus* and total bacteria at the start of the fermentation (T=0) and after 18 hours of fermentation (T=18) in Log(qPCR target copy numbers) for the different substrates (Blank, Inulin and SSPS) separated for the faecal material obtained from the three different volunteers (batch fermentation 1, 2 and 3) respectively.

**Table 2.**

| | | **Batch fermentation 1** | | |
|---|---|---|---|---|
| substrate | target | T=0 | T=18 | change |
| Blank | All bacteria | 10.0 | 9.3 | -0.7 |
| | Bacteroides | 8.9 | 8.5 | -0.5 |
| | Bifidobacteria | 7.8 | 7.7 | -0.1 |
| | Lactobacillus | 6.6 | 6.0 | -0.5 |
| Inulin | All bacteria | 9.8 | 10.2 | 0.4 |
| | Bacteroides | 8.6 | 9.5 | 0.9 |
| | Bifidobacteria | 7.8 | 9.3 | 1.6 |
| | Lactobacillus | 6.6 | 6.3 | -0.2 |
| SSPS | All bacteria | 9.7 | 10.3 | 0.6 |
| | Bacteroides | 8.5 | 9.5 | 1.0 |
| | Bifidobacteria | 7.7 | 9.2 | 1.5 |
| | Lactobacillus | 6.5 | 6.3 | -0.2 |

**Table 3.**

| | | **Batch fermentation 2** | | |
|---|---|---|---|---|
| substrate | target | T=0 | T=18 | change |
| Blank | All bacteria | 9.8 | 10.0 | 0.2 |
| | Bacteroides | 9.1 | 9.3 | 0.2 |
| | Bifidobacteria | 8.3 | 8.2 | -0.1 |
| | Lactobacillus | 6.7 | 6.7 | 0.1 |
| Inulin | All bacteria | 9.5 | 10.2 | 0.7 |
| | Bacteroides | 8.7 | 9.4 | 0.7 |
| | Bifidobacteria | 7.9 | 8.8 | 0.9 |
| | Lactobacillus | 6.7 | 6.7 | 0.1 |
| SSPS | All bacteria | 9.3 | 10.5 | 1.2 |
| | Bacteroides | 8.6 | 9.9 | 1.3 |
| | Bifidobacteria | 7.8 | 9.7 | 1.9 |
| | Lactobacillus | 6.5 | 6.6 | 0.2 |

**Table 4.**

| | | **Batch fermentation 3** | | |
|---|---|---|---|---|
| substrate | target | T=0 | T=18 | change |
| Blank | All bacteria | 9.3 | 9.6 | 0.3 |
| | Bacteroides | 8.3 | 8.6 | 0.2 |
| | Bifidobacteria | 6.7 | 7.2 | 0.5 |
| | Lactobacillus | 6.3 | 6.3 | 0.1 |
| Inulin | All bacteria | 9.0 | 10.0 | 1.0 |
| | Bacteroides | 8.0 | 9.2 | 1.2 |
| | Bifidobacteria | 6.9 | 8.1 | 1.2 |
| | Lactobacillus | 6.2 | 6.7 | 0.5 |
| SSPS | All bacteria | 9.1 | 10.3 | 1.2 |
| | Bacteroides | 8.0 | 9.4 | 1.4 |
| | Bifidobacteria | 6.8 | 8.5 | 1.7 |
| | Lactobacillus | 6.3 | 6.7 | 0.3 |

Although the water soluble soybean polysaccharide used for the experiments comprises minor amount of the known prebiotic soy oligosaccharides (raffinose and stachyose) the amount of these oligosaccharides are so low (i.e. less than 1 wt%) that they do not influence the results of the fermentation experiments. The obtained results therefore clearly show that water soluble soybean polysaccharide is in itself a prebiotic polysaccharide.

## Claims

1. A composition for use as a prebiotic, wherein the prebiotic selectively stimulates the growth of bifidobacteria, the composition comprising water soluble soybean polysaccharide, wherein the water soluble soybean polysaccharide comprises a galacturonic acid content of less than 40 mol%, preferably less than 30 mol% and a neutral sugar (side chains) content of over 40 mol%, preferably over 50 mol% and wherein the composition is consumed by a human in an amount of at least 2 g water soluble soybean polysaccharide per day.

2. A composition for use as a prebiotic according to claim 1 wherein the composition consumed in an amount of at least 3 g water soluble polysaccharide per day.

3. A composition for use as a prebiotic according to claim 1 of 2, wherein the water soluble soybean polysaccharide is comprised in a protein-containing beverage at a level of at least 1.0 wt%.

4. A composition for use as a prebiotic to claim 3, wherein the beverage is a soy protein-containing acidic beverage.

5. A composition for use as a prebiotic according to any one of the preceding claims, wherein the water soluble soybean polysaccharide is comprised in a packaged soy protein-containing acidic beverage in an amount of at least 2 g, preferably at least 3 g, per package.

6. A composition for use as a prebiotic according to claim 5 wherein the volume of the packaged beverage is between 50 and 500 ml, preferably between 125 and 300 ml.

7. A composition for use as a prebiotic according to any one of claims 3 to 6, wherein the beverage contains between 0.2 and 5 wt% of soy protein and wherein the soy protein has a degree of solubility at a pH of 4.5 of less than 40 wt%.

8. A composition for use as a prebiotic according to any one of claims 3 to 7, wherein the beverage is pasteurised or sterilised.

## Patentansprüche

1. Zusammensetzung zur Verwendung als Präbiotikum, wobei das Präbiotikum das Wachstum von Bifidobakterien selektiv stimuliert, wobei die Zusammensetzung wasserlösliches Sojabohnenpolysaccharid umfasst, wobei das wasserlösliche Sojabohnenpolysaccharid einen Gehalt an Galakturonsäure von weniger als 40 Mol-%, vorzugsweise weniger als 30 Mol-%, und einen Gehalt an neutralem Zucker (Seitenketten) von über 40 Mol-%, vorzugsweise über 50 Mol-%, umfasst und wobei die Zusammensetzung von einem Menschen in einer Menge von mindestens 2 g wasserlöslichem Sojabohnenpolysaccharid pro Tag verzehrt wird.

2. Zusammensetzung zur Verwendung als Präbiotikum nach Anspruch 1, wobei die Zusammensetzung in einer Menge von mindestens 3 g wasserlöslichem Polysaccharid pro Tag verzehrt wird.

3. Zusammensetzung zur Verwendung als Präbiotikum nach Anspruch 1 oder 2, wobei das wasserlösliche Sojabohnenpolysaccharid in einem Protein-haltigen Getränk in einer Konzentration von mindestens 1,0 Gew.-% umfasst wird.

4. Zusammensetzung zur Verwendung als Präbiotikum nach Anspruch 3, wobei das Getränk ein Sojaprotein-enthaltendes saures Getränk ist.

5. Zusammensetzung zur Verwendung als Präbiotikum nach irgendeinem der vorhergehenden Ansprüche, wobei das wasserlösliche Sojabohnenpolysaccharid in einem verpackten Sojaprotein-enthaltenden sauren Getränk in einer Menge von mindestens 2 g, vorzugsweise mindestens 3 g, pro Verpackung, umfasst wird.

6. Zusammensetzung zur Verwendung als Präbiotikum nach Anspruch 5, wobei das Volumen des verpackten Getränks zwischen 50 und 500 ml, vorzugsweise zwischen 125 und 300 ml liegt.

7. Zusammensetzung zur Verwendung als Präbiotikum nach irgendeinem der Ansprüche 3 bis 6, wobei das Getränk zwischen 0,2 und 5 Gew.-% Sojaprotein enthält und wobei das Sojaprotein einen Löslichkeitsgrad bei einem pH von 4,5 von weniger als 40 Gew.-% aufweist.

8. Zusammensetzung zur Verwendung als Präbiotikum nach irgendeinem der Ansprüche 3 bis 7, wobei das Getränk pasteurisiert oder sterilisiert ist.

## Revendications

1. Composition pour une utilisation comme un prébiotique, dans laquelle le prébiotique stimule sélectivement la croissance de bifidobactéries, la composition comprenant un polysaccharide de soja soluble dans l'eau, dans laquelle le polysaccharide de soja soluble dans l'eau comprend une teneur en acide galacturonique inférieure à 40 % en mole, de préférence inférieure à 30 % en mole, et une teneur en sucre neutre (chaînes latérales) supérieure à 40 % en mole, de préférence supérieure à 50 % en mole et dans laquelle la composition est consommée par un être humain dans une quantité d'au moins 2 g de polysaccharide de soja soluble dans l'eau par jour.

2. Composition pour une utilisation comme un prébiotique selon la revendication 1, dans laquelle la composition est consommée dans une quantité d'au moins 3 g de polysaccharide soluble dans l'eau par jour.

3. Composition pour une utilisation comme un prébiotique selon la revendication 1 ou 2, dans laquelle le polysaccharide de soja soluble dans l'eau est compris dans une boisson contenant une protéine à une teneur d'au moins 1,0 % en masse.

4. Composition pour une utilisation comme un prébiotique selon la revendication 3, dans laquelle la boisson est une boisson acide contenant une protéine de soja.

5. Composition pour une utilisation comme un prébiotique selon l'une quelconque des revendications précédentes, dans laquelle le polysaccharide de soja soluble dans l'eau est compris dans une boisson acide contenant une protéine de soja emballée dans une quantité d'au moins 2 g, de préférence d'au moins 3 g, par emballage.

6. Composition pour une utilisation comme un prébiotique selon la revendication 5, dans laquelle le volume de la boisson emballée est de 50 à 500 ml, de préférence de 125 à 300 ml.

7. Composition pour une utilisation comme un prébiotique selon l'une quelconque des revendications 3 à 6, dans laquelle la boisson contient de 0,2 à 5 % en masse de protéine de soja et dans laquelle la protéine de soja présente un degré de solubilité à un pH de 4,5 inférieur à 40 % en masse.

8. Composition pour une utilisation comme un prébiotique selon l'une quelconque des revendications 3 à 7, dans laquelle la boisson est pasteurisée ou stérilisée.
